# EUROPÄISCHE PATENTSCHRIFT

(11) **EP 0 805 015 B1**
(45) Veröffentlichungstag und Bekanntmachung des Hinweises auf die Patenterteilung: **24.07.2002**
(21) Anmeldenummer: 97105325.1
(22) Anmeldetag: 29.03.1997
(51) Int. Cl.: B29C 47/90, B29C 47/92

(54) **Vorrichtung zum Flachlegen eines Folienschlauches**
Device for flattening a blown tubular film
Dispositif de mise à plat d'un film tubulaire soufflé

(30) Priorität: 03.05.1996 DE 19617811
(43) Veröffentlichungstag der Anmeldung: 05.11.1997
(73) Patentinhaber: Windmöller & Hölscher, D-49525 Lengerich (DE)
(72) Erfinder: Sensen, Klemens, 49525 Lengerich (DE); Voss, Klaus-Peter, 49525 Lengerich (DE); Dellbrügge, Herbert, 49525 Lengerich (DE); Schiballa, Siegfried, 49525 Lengerich (DE)

(56) Entgegenhaltungen:
- EP-A- 0 305 605
- DE-A- 3 637 941
- US-A- 3 492 693
- US-A- 4 784 590
- US-A- 4 815 957

## Beschreibung

Die Erfindung betrifft eine Vorrichtung zum Flachlegen eines aus einer aus einem Folienblaskopf einer Blasfolienanlage extrudierten, aufgeblasenen Folienblase abgezogenen Folienschlauches, bestehend aus die Folienblase begrenzenden und keilförmig an diese angestellten Flachlegeplatten, die den Abquetschwalzen einer Folienabzugs- und Aufwickeleinrichtung vorgeschaltet sind, aus einem reversierend angetriebenen Gestell, in dem die Flachlegeplatten gehaltert, die Abquetschwalzen gelagert und um dessen Drehachse Wendestangen und gegebenenfalls Umlenkrollen schwenkbar gelagert sind, und aus einer zwischen dem Folienblaskopf und den Flachlegeplatten angeordneten Kalibriereinrichtung.

Blasfolienanlagen mit um bis zum 360° reversierenden Flachlegeplatten und mit Umlenkwalzen und Wendestangen dieser Art sind beispielsweise aus den DE-OS 20 35 584, 43 03 952, den DE-PS 21 56 079, 35 06 772 und der EP 0 292 614 A2 bekannt. Den reversierenden Flachlegeplatten ist eine üblicherweise aus einem sog. Kalibrierkorb bestehende Kalibriereinrichtung vorgeschaltet, der die Folienblase im Bereich und oberhalb der sog. Frostlinie abstützt.

Aus der US-A-4 351 785 ist eine Vorrichtung gemäß dem Oberbegriff des Anspruchs 1 bekannt, wobei die Flachlegeplatten und der Kalibrierkorb drehend angetrieben sind.

Um ein besseres Gleiten des Folienschlauches während seiner Flachlegung über die Flachlegeplatten zu ermöglichen, können diese mit Leisten aus reibungsarmen Oberflächen oder mit reibungsarmen Beschichtungen oder aber auch mit Röllchen oder Walzen versehen sein. Trotz einer gleitarmen Führung des flachzulegenden Folienschlauches auf den Flachlegeplatten können sich Probleme beim Flachlegen des Folienschlauches ergeben, wenn dessen noch nicht völlig erkaltete Oberfläche klebrig ist. Insbesondere ergeben sich beim Flachlegen dann Schwierigkeiten, wenn ein reversierender Abzug vorgesehen ist, also die Flachlegeplatten mit den nachgeschalteten Abquetschwalzen um Winkel bis zu 360° reversierend angetrieben sind. Bei einem reversierenden Abzug tritt bei dem Flachlegen von stark haftenden oder klebenden Folienschläuchen eine unerwünschte Randfaltenbildung im oberen Bereich der Flachlegeplatten auf, die sich aus der Verdrallung des Folienschlauches bei der reversierenden Drehbewegung ergibt. Bei nicht haftenden, gut gleitenden Folien kann sich diese Verdrallung durch eine quergerichtete Gleitbewegung der Folie gegenüber den Flachlegeplatten ausgleichen. Bei stark haftenden und klebenden Folien ist dieser Ausgleich jedoch nicht möglich, weil diese zu stark an den Flachlegeplatten bzw. an den auf diesen angeordneten Gleitstegen, Röllchen oder Walzen haften, so daß es vor den Abquetschwalzen zu einer unerwünschten Randfaltenbildung kommt.

Aufgabe der Erfindung ist es, eine Vorrichtung der eingangs angegebenen Art zu schaffen, bei der Störungen und Randfaltenbildungen aufgrund einer sich nicht ausgleichenden Verdrallung des Folienschlauches im Bereich der Flachlegeplatten vermieden sind.

Erfindungsgemäß wird diese Aufgabe bei einer Vorrichtung der eingangs angegebenen Art dadurch gelöst, daß die Kalibriereinrichtung gemäß dem kennzeichnenden Teil des Anspruchs 1, mit jeweils gleicher Drehrichtung wie die Flachlegeplatten drehend angetrieben sind.

Bei der erfindungsgemäßen Vorrichtung führt die Kalibriereinrichtung gleichsinnige Drehbewegungen wie die Flachlegeplatten aus. Da die Kalibriereinrichtung aus die Folienblase seitlich abstützenden Ringen oder ringförmigen Segmenten besteht, die mit reibungsarmen Belägen oder Röllchen versehen sind, nehmen diese aufgrund ihrer reversierenden Drehbewegung den von diesen abgestützten Abschnitt der Folienblase mit, so daß die aufgrund der Reversierung bewirkte Verdrallung des Folienschlauches in einen Bereich unterhalb der Flachlegeplatten verlegt wird, in dem die Folienblase noch plastisch ist, so daß die Verdrallung durch plastische Verformung der Folienblase ausgeglichen wird und zur Bildung von Randfalten und Störungen verursachende Verzerrungen des Folienschlauches beim Flachlegen im Bereich der Flachlegeplatten vermieden sind. Nach der Erfindung wird der durch das Reversieren erzeugte Drall somit sehr weit in den plastischen Bereich der Folienblase verlagert, in dem er ohne Störungen durch Verdrallung der noch plastischen Folienblase ausgeglichen werden kann.

Die Kalibriereinrichtung kann unmittelbar mit den Flachlegeplatten verbunden sein, so daß diese zusammen mit den Flachlegeplatten reversiert.

Nach einer anderen Ausführungsform ist vorgesehen, daß die Kalibriereinrichtung durch einen Drehkranz mit dem Folienblaskopf verbunden und durch einen Servomotor angetrieben ist. Dabei kann die Kalibriereinrichtung mit einer geringeren Drehgeschwindigkeit als die Flachlegeplatten angetrieben sein, so daß sich das Ausmaß der Verdrallung an die geringere Höhe der Kalibriereinrichtung gegenüber den Flachlegeplatten und den Abzugswalzen anpassen läßt.

Ausführungsbeispiele der Erfindung wird nachstehend anhand der Zeichnung näher erläutert. In dieser zeigt
- Fig. 1: eine erste Ausführungsform einer Blasfolienanlage in schematischer Seitenansicht, bei der der Kalibrierkorb unmittelbar mit den Flachlegeplatten verbunden ist, und
- Fig. 2: eine zweite Ausführungsform einer Blasfolienanlage in schematischer Seitenansicht, bei der der Kalibrierkorb durch einen Drehkranz auf dem Folienblaskopf abgestützt und durch einen eigenen Antrieb angetrieben ist.

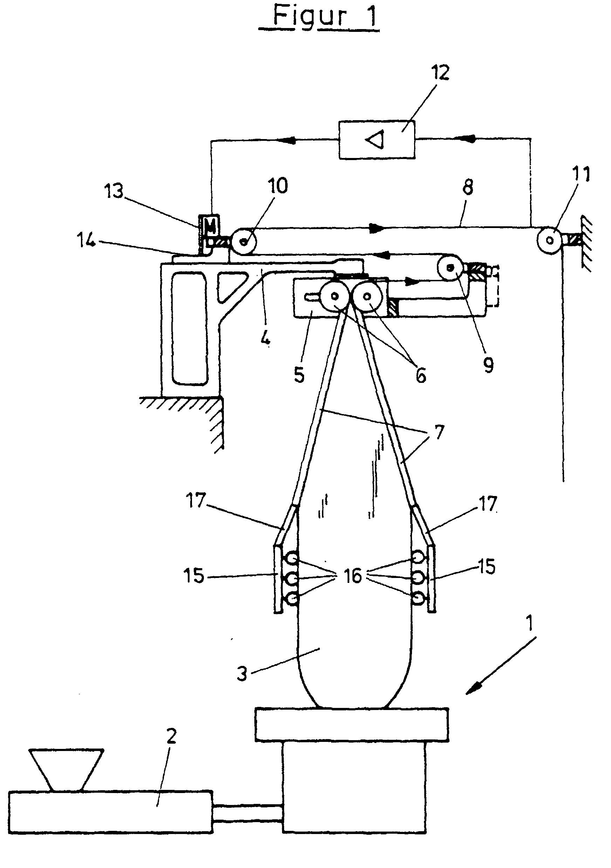

Aus Fig. 1 ist ein üblicher Folienblaskopf 1 ersichtlich, der von einem Extruder 2 mit einer Kunststoffschmelze gespeist wird. Aus dem Ringspalt des Folienblaskopfes 1 tritt in vertikaler Richtung ein Folienschlauch aus, der durch Stütz- und Kühlluft in üblicher Weise zu einer Folienblase 3 aufgeblasen wird. Die Stütz- und Kühlluft wird durch den Folienblaskopf durchsetzende Leitungen, die nicht dargestellt sind, zu- und abgeführt.

Oberhalb des Folienblaskopfes 1 ist an einem stationären galgenförmigen Träger 4 ein Gestell 5 um eine vertikale Drehachse drehend gelagert, in dem Abzugs- und Abquetschwalzen 6 drehbar gelagert und Flachlegeplatten 7 gehaltert sind. Das Gestell 5 ist durch einen nicht dargestellten Antrieb um bis zu 360° reversierend angetrieben. Der aus der Folienblase 3 abgezogene, flachgelegte Folienschlauch 8 läuft über die Wendestangen 9, 10 und die gestellfest gelagerte Umlenkrolle 11 zu einer nicht dargestellten Aufwickelvorrichtung. Im Bereich zwischen der Wendestange 10 und der Umlenkwalze 11 ist eine Meßvorrichtung angeordnet, die aus zwei Kantenabtastem besteht. Erfassen diese Kantenabtaster einen Versatz der Kanten des abgezogenen Folienschlauches, erzeugen sie Meßsignale, die einer Steuerschaltung 12 zugeführt werden. In linearer Abhängigkeit der Meßsignale erzeugt die Steuerschaltung 12 Steuersignale, die einem Motor 13 zugeführt werden, der auf dem galgenartigen Träger 4 angeordnet ist und bei seinem Betrieb den U-förmigen Rahmen 14 und damit die Wendestange 10 um ihre vertikale Achse schwenkt. Die vorstehend beschriebene Abzugs- und Flachlegevorrichtung für im Blasverfahren von einem Extruder mit Folienblaskopf hergestellte Schlauchfolien ist aus EP 0 292 614 A2 bekannt, auf die zur näheren Beschreibung Bezug genommen wird.

Von der aus EP 0 292 614 A2 bekannten Vorrichtung unterscheidet sich das Ausführungsbeispiel der Erfindung nach Fig. 1 dadurch, daß der Kalibrierkorb 15 mit den in diesem gehalterten kalibrierenden Ringen oder Ringsegmenten 16 über Tragstücke 17 unmittelbar mit den Flachlegeplatten 7 verbunden ist, so daß der Kalibrierkorb 15 mit gleicher Drehrichtung und gleichen Drehwinkeln mit den Flachlegeplatten 7 reversiert.

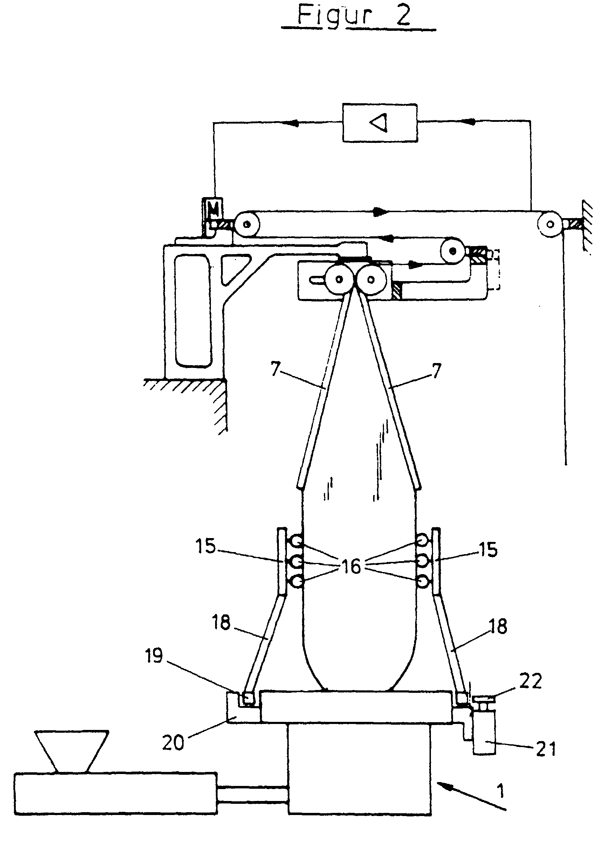

Aus Fig. 2 ist eine Blasfolienanlage mit einer Abzugsvorrichtung für die im Blasverfahren von dem Extruder mit Folienblaskopf hergestellte Schlauchfolie ersichtlich, die grundsätzlich gleich aufgebaut ist wie die anhand der Fig. 1 beschriebene. Die Vorrichtung nach Fig. 2 unterscheidet sich jedoch von der anhand der Fig. 1 beschriebenen dadurch, daß der Kalibrierkorb 15 mit den Abstützringen bzw. ringförmigen Abstützsegmenten 16 nicht an den Flachlegeplatten 7 befestigt ist, sondern über Träger 18 mit einem außenverzahnten Drehkranz 19 verbunden ist, der drehbar auf einem mit dem Folienblaskopf verbundenen Tragring 20 gelagert ist. An den Tragring 20 ist eine in seiner Drehgeschwindigkeit und seiner Drehrichtung steuerbarer Servomotor 21 angeflanscht, dessen Abtriebsritzel 22 mit der Außenverzahnung des Drehkranzes 19 kämmt. Der Drehkranz 20 ist konzentrisch zur Mittellinie des extrudierten Folienschlauches angeordnet. Der Servomotor 21 wird durch eine nicht dargestellte Steuereinrichtung in der Weise gesteuert, daß der Kalibrierkorb 15 mit gleicher Drehrichtung wie die Flachlegeplatten und mit einem Drehwinkel reversiert, der dem Abstand des Kalibrierkorbes 15 von dem Folienblaskopf 1 und den Flachlegeplatten 7 angepaßt ist.

## Patentansprüche

1. Vorrichtung zum Flachlegen eines aus einer aus einem Folienblaskopf (1) einer Blasfolienanlage extrudierten, aufgeblasenen Folienblase (3) abgezogenen Folienschlauches (8), bestehend
aus die Folienblase (3) begrenzenden und keilförmig an diese angestellten Flachlegeplatten (7), die den Abquetschwalzen (6) einer Folienabzugs- und Aufwickeleinrichtung vorgeschaltet sind,
aus einem reversierend angetriebenen Gestell (5), in dem die Flachlegeplatten (7) gehaltert, die Abquetschwalzen (6) gelagert und um dessen Drehachse Wendestangen (9, 10) und gegebenenfalls eine Umlenkwalze schwenkbar gelagert sind, und
aus einer zwischen dem Folienblaskopf (1) und den Flachlegeplatten (7) angeordneten Kalibriereinrichtung (15),
***dadurch gekennzeichnet*,**
**daß** die Kalibriereinrichtung (15) mit jeweils gleicher Drehrichtung wie die Flachlegeplatten (7) drehend angetrieben ist.

2. Vorrichtung nach Anspruch 1, **dadurch gekennzeichnet, daß** die Kalibriereinrichtung (15) mit den Flachlegeplatten (17) verbunden ist.

3. Vorrichtung nach Anspruch 1 oder 2, **dadurch gekennzeichnet, daß** die Kalibriereinrichtung (15) durch einen Drehkranz (19) und dem Folienblaskopf (1) verbunden und durch einen Servomotor (21) angetrieben ist.

4. Vorrichtung nach Anspruch 3, **dadurch gekennzeichnet, daß** die Kalibriereinrichtung (15) mit geringerer Drehgeschwindigkeit als die Flachlegeplatten (7) angetrieben ist.

## Claims

1. Device for flattening a blown tubular film (8) drawn off from an inflated film bubble (3) extruded from a film blowing die (1) of a blown film installation, comprising
flattening boards (7), which are arranged upstream of the pinch rolls (6) of a film drawing-off and winding-up device, bound the film bubble and are placed against it in a wedge-shaped manner,
comprising a reversibly driven frame (5), in which the flattening boards (7) are secured, the pinch rolls (6) are mounted and about the axis of rotation of which reversing rods (9, 10) and, if appropriate, a deflecting roll are pivotably mounted, and
comprising a calibrating device (15) arranged between the film blowing die (1) and the flattening boards (7),
**characterized**
**in that** the calibrating device (15) is driven in a rotating manner with the same direction of rotation in each case as the flattening boards (7).

2. Device according to Claim 1, **characterized in that** the calibrating device (15) is connected to the flattening boards (7).

3. Device according to Claim 1 or 2, **characterized in that** the calibrating device (15) is connected by a live ring (19) to the film blowing die (1) and is driven by a servo motor (21).

4. Device according to Claim 3, **characterized in that** the calibrating device (15) is driven at a lower rotational speed than the flattening boards (7).

## Revendications

1. Dispositif de mise à plat d'un film tubulaire (8) retiré d'une bulle de feuille (3) gonflée par soufflage, extrudée à partir d'une tête de soufflage de feuille (1) d'une installation de feuilles de soufflage, constitué
- de plaques de mise à plat (7) délimitant la bulle en feuille (3) et appliquées en forme de coin à celle-ci, qui sont disposées en amont des rouleaux d'écrasement (6) d'une installation de retrait et d'enroulement de feuille,
- d'un bâti (5) à entraînement réversible dans lequel sont maintenues les plaques de mise à plat (7), sont logés les rouleaux d'écrasement (6) et autour de l'axe de rotation duquel sont logés d'une manière pivotante des tiges de retournement (9, 10) et le cas échéant un rouleau de renvoi, et
- d'une installation de calibrage (15) disposée entre la tête de soufflage de feuille (1) et les plaques de mise à plat (7),
**caractérisé en ce**
- **que** l'installation de calibrage (15) est entraînée en rotation respectivement dans la même direction de rotation que les plaques de mise à plat (7).

2. Dispositif selon la revendication 1, **caractérisé en ce que** l'installation de calibrage (15) est reliée aux plaques de mise à plat (17).

3. Dispositif selon la revendication 1 ou 2, **caractérisé en ce que** l'installation de calibrage (15) est reliée par une couronne tournante (19) et la tête de soufflage de feuille (1) et est entraînée par un servomoteur (21).

4. Dispositif selon la revendication 3, **caractérisé en ce que** l'installation de calibrage (15) est entraînée à une vitesse de rotation plus réduite que les plaques de mise à plat (7).
